## Europäisches Patentamt
## European Patent Office
## Office européen des brevets

(19)

(11) Veröffentlichungsnummer: **0 003 504**
**A1**

(12) # EUROPÄISCHE PATENTANMELDUNG

(21) Anmeldenummer: **79100099.5**

(22) Anmeldetag: **15.01.79**

(51) Int. Cl.²: **H 04 Q 3/54, H 04 Q 3/70, H 04 M 3/60, H 04 Q 3/62**

(30) Priorität: **10.02.78 DE 2805584**

(43) Veröffentlichungstag der Anmeldung: **22.08.79**
Patentblatt **79/17**

(84) Benannte Vertragsstaaten: **BE FR IT**

(71) Anmelder: **Telefonbau und Normalzeit GmbH, Mainzer Landstrasse 128-146, D-6000 Frankfurt (Main) (DE)**

(72) Erfinder: **Cezanne, Lothar, Bahnstrasse 3a, D-6082 Mörfelden-Walldorf (DE)**
Erfinder: **Resch, Wolfgang, Karlsbader Strasse 29, D-6090 Rüsselsheim (DE)**
Erfinder: **Scherer, Manfred, Ing. Grad., Sömmerringstrasse 27, D-6000 Frankfurt (Main) 1 (DE)**
Erfinder: **Beckmann, Jürgen, Dipl.-Ing., Kalbacher Stadtpfad 11, D-6000 Frankfurt (Main) 56 (DE)**

(54) **Zentraler Zustandsspeicher für Vermittlungsanlagen.**

(57) Die vorliegende Erfindung betrifft einen zur Speicherung von zu Anschlußeinrichtungen gehörenden Daten dienenden Speicher einer zentralgesteuerten Vermittlungsanlage. Bei den bekannten Speichern dieser Art sind zur Vereinfachung der Steuerungsabläufe jeweils die zu gleichartigen Anschlußeinrichtungen gehörenden Speicherbereiche räumlich benachbart angeordnet. Dies kann zu Schwierigkeiten bei der Erweiterung von Vermittlungsanlagen um zusätzliche Anschlußeinrichtungen führen, aber auch für den Fall, daß eine besetzte oder gestörte Anschlußeinrichtung in dem zugehörigen Speicherbereich als frei gekennzeichnet ist.

Die Erfindung schlägt daher vor, den einzelnen räumlich nebeneinander liegenden Speicherbereichen Anschlußeinrichtungen unterschiedlicher Art zuzuordnen, so daß zu gleichartigen Anschlußeinrichtungen gehörende Speicherbereiche über den gesamten Speicher verteilt angeordnet sind.

## Zentraler Zustandsspeicher für Vermittlungsanlagen

In indirekt gesteuerten Vermittlungsanlagen mit zentralisierten Steuerungskonzept ist es notwendig, einen oder mehrere Zustandsspeicher zentral anzuordnen, in dem bzw. in denen sowohl die sich ständig ändernden Zustandsdaten der Anschlußeinrichtungen als auch unveränderliche Parameter der Anlage bzw. der einzelnen Anschlußeinrichtungen abgelegt werden können. Aus diesen Daten bestimmten sich dann die Steuerungsvorgänge in der Vermittlungsanlage, die durch entsprechend eingeschaltete Programmläufe gekennzeichnet sind.

Da sich die einzelnen Anschlußeinrichtungen in dem zur Durchführung der Steuervorgänge notwendigen Speicherbedarf stark voneinander unterscheiden, wurden bisher regelmäßig Gruppen gleichartiger Anschlußeinrichtungen jeweils eigene zentrale Speicher fest zugeordnet.

Es ist aber auch aus der Deutschen Patentschrift 11 92 273 eine Speicheranordnung bekannt geworden, bei der Speicherplätze von Anschlußeinrichtungen verschiedener Art, die sich aber in Funktionsweise nur relativ wenig voneinander unterscheiden, in einem gemeinsamen Arbeitsspeicher zusammengefaßt sind.

Aus der DE-AS 15 62 233 ist es darüberhinaus noch bekannt, auch die Zustände stark voneinander abweichender Anschlußeinrichtungen wie z.B. Teilnehmerschaltungen, Amtsübertragungen, Vermittlungsplätze u.ä. in einem einzigen Speicher zu speichern.

Allen bekannten Zustandsspeichern der eingangs genannten Art, die vielfach auch als Verbindungsspeicher bezeichnet werden, ist es aber gemeinsam, daß die den einzelnen gleichartigen Anschlußeinrichtungen zugeordneten Speicherbereiche jeweils in einem bestimmten Feld des gemeinsamen Verbindungsspeichers zusammenhängend angeordnet sind. Dies gibt insofern eine gewisse Vereinfachung der Steuerprogramme, als daß der Steuerung von vorn herein bekannt ist, daß die Informationen für eine bestimmte Anschlußeinrichtung nur in einem vorgegebenen Feld, in dem die Informationen über diese Anschlußeinrichtungen abgelegt sind, aufgefunden werden kann. Es ist also nur notwendig, dieses Feld des gemeinsamen Vermittlungsspeichers auf die benötigten Informationen abzusuchen. Während eine derartige Konstellation für große Anlagen wegen der verkürzbaren Suchläufe sehr zweckmäßig sein mag, fällt dieser Vorteil bei kleineren Vermittlungsanlagen weniger ins Gewicht. Dagegen beinhaltet die geschilderte Organisation den Nachteil, daß eine Erweiterung der Anlage durch hinzufügen zusätzlicher Anschlußeinrichtungen oder durch Ändern der gewählten Anschlußeinrichtungen nur schwer möglich ist, da entweder die einzelnen Speicherfelder neu aufgeteilt werden müssen oder aber ein großer Prozentsatz der einzelnen Felder anfangs freigelassen werden muß, damit derartige Änderungen oder Ergänzungen ohne weiteres möglich sind.

Aber auch selbst unter diesen Voraussetzungen sind Ergänzungen und Änderungen der Anschlußeinrichtungen bei den bekannetn Speicheranordnungen nur bedingt möglich.

Die Erfindung geht daher aus von einer Anordnung zur zentralen Speicherung, der die Zustände von Anschlußeinrichtungen betreffenden Informationen, insbesondere bei Vermittlungsanlagen, bei der jeder Anschlußeinrichtung ein Speicherbereich fest zugeordnet ist.

Aufgabe der Erfindung ist es eine Anordnung der genannten Art zu schaffen, welche eine leichte Erweiterung der Vermittlungsanlage oder eine Änderung der angeschlossenen Anschlußeinrichtungen zuläßt, wobei insbesondere eine Möglichkeit geschaffen werden soll, die einzelnen zur Verbindung der Anschlußeinrichtungen notwendigen Steuervorgänge durch unkomplizierte Programmläufe herzustellen.

Die Aufgabe wird erfindungsgemäß dadurch gelöst, daß die Speicherbereiche der verschiedenartigen Anschlußeinrichtungen in beliebiger Reihenfolge nacheinander in einem Zustandsspeicher angeordnet sind. Durch die so geschaffene Lösung ist es zwar immer notwendig dafür zu sorgen, daß im ungünstigsten Falle der gesamte Speicher nach den Informationen einer Anschlußeinrichtung abgesucht wird. Hierdurch gewinnt man aber den erheblichen Vorteil, daß die Vermittlungsanlage ohne Schwierigkeiten erweiterbar ist, da die Speicherbereiche der hinzugefügten Anschlußeinrichtungen in dem noch freien (unteren) Teil des Zustandsspeichers untergebracht werden können, wobei dieser freie Teil sich unter Umständen noch durch einen zusätzlich angefügten Speicher erweitern läßt. Insbesondere schafft die erfindungsgemäße Lösung die Möglichkeit, die Speicherbereiche der Anschlußeinrichtungen entsprechend ihrer Anschlußlage in den Buchten der Vermittlungsschränke anzuordnen, so daß sich durch Zusammenfügen mehrerer geeigneter Buchten unterschiedliche Anlagentypen zusammenfügen lassen, ohne daß hierdurch das Steuerungskonzept geändert werden müßte. Den einzelnen eine geeignete Kombination von Teilnehmerschaltungen, Innenverbindungssätzen, Amtsübertragung und ähnlichem aufweisenden Buchten, die durch geeignete Auswahl ihrer jeweiligen Anschlußeinrichtungen sich zu gängigen Anlagentypen zusammensetzen lassen, entsprechen somit in dem gemeinsamen zentral angeordneten Zustandsspeicher bestimmte Speichermodule, die bei Ergänzung der Gesamtanlage oder bei ihrer Änderung entsprechend ausgetauscht werden. Da das Steuerungskonzept auf die Lage des Speicherbereichs einer Anschlußeinrichtung innerhalb des Zustandsspeichers keine Rücksicht nimmt, sondern regelmäßig nur mit dessen Anschlußnummer operiert, wird durch derartige Änderungen das Steuerkonzept nicht betroffen, es kann also für sämtliche Anlagentypen gleich sein.

In vorteilhafter Weiterbildung der Erfindung empfiehlt sich eine in Anspruch 2 dargelegte Merkmalskombination, die im Prinzip besagt, daß sämtliche Anschlußeinrichtungen in einem gemeinsamen Zustandsspeicher die ihnen zugeordneten Informationen unterbringen, wobei die Lage der entsprechenden Speicherbereiche willkürlich ist. Es werden also für die stark voneinander abweichenden Anschlußeinrichtungen keinerlei getrennte Speicher vorgesehen, wodurch sich ein sehr einfaches Steuerungskonzept ergibt, da das Aufsuchen von Informationen hinsichtlich der einzelnen Anschlußeinrichtungen immer weitgehend gleichartig gestaltet ist.

Eine andere vorteilhafte Weiterbildung der Erfindung ergibt sich aus der Merkmalskombination nach Anspruch 3, die besagt, daß jeder Anschlußeinrichtung ein gleich hroßer Speicherbereich, eben eine sogenannte Zeile, zugeordnet wird. Auch hierdurch ergibt sich wiederum eine weitgehende Anpassung der zum Zugriff zu den einzelnen Bereichen notwendigen Vorgänge, die wiederum in einem gleichartigen und damit weitgehend genormten Programmlauf ihren Ausdruck findet. Die relativ großzügige Bemessung von Speicherplatz hinsichtlich einzelner, wenig speicherintensiver Anschlußeinrichtungen findet ihren Ausgleich in einem verkürzten, für den Zugriff zu allen Speicherbreichen immer wieder verwendbaren Programm.

Soweit aber einzelne Anschlußeinrichtungen einen weit über das übliche Maß hinausgehenden Bedarf von Speicherplatz besitzen, so empfiehlt sich eine Merkmalskombination wie sie in Anspruch 4 hinsichtlich der Vermittlungsplätze aufgezeigt ist. Diese Merkmalskombination nach Anspruch 4 zeigt eine bewußte Durchbrechung des in Anspruch 3 angegebenen Schemas mit dem Zweck, unverwendbaren Speicherplatz zu sparen, der anderenfalls benötigt würde.

Bei indirekt gesteuerten Vermittlungsanlagen besteht das Problem, daß durch die Gleichförmigkeit des Programmlaufes eine gestörte Anschlußeinrichtung immer wieder angeschaltet wird. Der Grund dafür ist der folgende. Sind z.B. die Speicherbereiche aller Innenverbindungssätze nacheinander in dem Zustandsspeicher angeordnet, so wird der Suchlauf eines Suchprogramms regelmäßig so vor sich gehen, daß die einzelnen Speicherbereiche der Innenverbindungssätze nacheinander auf ihren Freizustand abgesucht werden. Unabhängig also davon, von wo innerhalb des Zustandsspeichers der Suchlauf beginnt wird er immer bei dem ersten Innenverbindungssatz enden, dessen Speicherbereich einen freien Zustand aufweist. Nimmt man nun aber an, daß dieser Innenverbindungssatz gestört ist und die Teilnehmer nach Erkennen dieser Tatsache immer gleich wieder auflegen, so werden nacheinander alle Teilnehmer bei diesem gestörten Innenverbindungssatz auflaufen. Zur Beseitigung dieses Mißstandes sind relativ komplizierte Programme vorgeschlagen worden, z.B. indem der zweite freie Innenverbindungssatz beim Belegen des ersten freien Innenverbindungssatzes markiert wird, oder indem die Suche nach einem Innenverbindungssatz nicht immer über den Beginn des entsprechenden Speicherfeldes läuft. Auch gegen diese Schwierigkeit schafft die vorliegende Erfindung Abhilfe, da die einzelnen Übertragungen bzw. Verbinsungssätze über den gesamten Zustandsspeicher verteilt sind. Läuft nun der Suchlauf, wie es bei einer zusätzlichen vorteilhaften Weiterbildung der Erfindung angenommen werden soll, immer von der Stellung aus an, zu der die Steuerung in dem Speicher zuletzt Zugriff hatte, so wird man in der Regel immer bei der erfindungsgemäßen Anordnung zu einem anderen Innenverbindungssatz bzw. zu einer anderen Amtsübertragung gelangen, je nach dem, von welcher Teilnehmerzeile aus gestartet wurde. Um diesen Effekt noch mehr zu verstärken, wird eine in Anspruch 5 dargelegte Merkmalskombination in Verbesserung der Erfindung vorgeschlagen. Praktisch wird man dabei so vorgehen, daß die Zeilen der Innenverbindungssätze bzw. Amtsübertragungen in dem Zustandsspeicher allein stehend geordnet sind, während zwischen diesen Zeilen dann die Zeilen einzelner Teilnehmer angeordnet werden.

Zu den einzelnen Anschlußeinrichtungen gehört oft eine erhebliche Informationsmenge, von denen zur Durchführung einzelner Steueroperationen aber immer nur ein geringfügiger Teil benötigt wird. Um nun aber zu verhindern, daß immer die gesamte einer Anschlußeinrichtung zugeordnete Informationsmenge verarbeitet werden muß, empfiehlt sich eine in Anspruch 6 aufgezeigte Kombination von Merkmalen anzuwenden, die dahin zielt, immer nur einen gewünschten Teil der gespeicherten Informationsmenge der zentralen Steuerung zur Verfügung zu stellen. Im Gegensatz zu den bekannten Auslesesystemen, bei denen Teile der Gesamtinformation durch matrixförmige Ansteuerung ausgelesen werden, wird bei der hier vorgeschlagenen Kombination der gesamte Zeileninhalt im Register parallel übertragen aber nur der Inhalt eines bestimmten Registers, welches das zu verarbeitende Wort bzw. die diesem Wort entsprechende Information enthält, an die zentrale Steuerung weitergegeben.

Die einer einzelnen Anschlußeinrichtung zugeordneten Informationen sind von unterschiedlicher Qualität. So ist es z.B. notwendig, eine Rufnummernzuordnung zwischen der externen Rufnummer des Teilnehmers und der für die Steuerungsvorgänge wesentlichen internen Nummer der Anschlußeinrichtung vorzusehen. Diese Nummern brauchen je durchaus nicht übereinzustimmen, denn in dem Zustandsspeicher gibt es nur eine bestimmte Anzahl von Anschlußnummern (z.B. 256), während die externe Rufnummer sich oft nach ganz anderen Gesichtspunkten (z.B. dem Raum in dem sich der Teilnehmerapparat befindet) richtet. Ebenso kann in der Zeile einer Anschlußeinrichtung die Berechtigung eines Teilnehmers, das von ihm angewendete Wählverfahren und ein Hinweis darauf gespeichert sein, ob dieser Teilnehmer überhaupt angeschlossen ist oder nicht. Alle diese Informationen werden sicherlich relativ selten ändern und können daher in einem preiswerten Speicher (z.B. ROM und/oder PROM) gespeichert werden. Für bestimmte Fälle z.B. die Berechtigung, die für das Wartungspersonal möglichst transparent sein soll, kann sich darüberhinaus noch die Verwendung eines Diodenfeldes als Speichermöglichkeit empfehlen. Andererseits gibt es auch wieder Daten, die sich sehr schnell und oft ändern, wie z.B. die Nummer eines von einem Teilnehmer gewählten anderen Teilnehmers, die Gebührenanzeige, der Aushängezustand, die Nummer des angeschalteten Innenverbindungssatzes und ähnliches. Alle diesen Informationen wird man in einem Speicher ablegen, dessen Inhalt leicht änderbar ist, also vorzugsweise on einen RAM. Auch ein Kernspeicher wäre hierfür möglich. Es wird somit als ein für sich allein auch erfinderisches Merkmal vorgeschlagen, daß sich die einzelnen Zeilen aus unterschiedlichen Speichertypen zusammensetzen, wobei dies derart geschehen kann, daß einander gleiche Worte einer Zeile jeweils auch aus einem gleichen Speichertyp gebildet sind. Der gesamte Zustandsspeicher setzt sich somit aus einzelnen, quer zur Zeilenrichtung verlaufenden Teilspeichern zusammen. Es wird also auf diese Weise der Typ des jeweiligen Teilspeichers eng an die Bedürfnisse der dort zu speichernden Informationen angepaßt, so daß Teile dieses Speichers nicht nur besonders billig werden, sondern trotz ihrer Preiwürdigkeit noch den Gesamtspeicher durch besondere Vorzüge auszeichnen, wie dies z.B. bei einem der Fall ist, der darüberhinaus noch die Eigenschaft hat, die in ihm gespeicherten Informationen unverlierbar zu machen.

Die vorliegende Erfindung gibt aber auch noch die Möglichkeit zu einer in einer anderen Richtung liegenden Weiterbildung, wie sie schon im Zusammenhang mit der Merkmalskombination nach Anspruch 5 kurz umrissen wurde. Es wurde schon erläutert, daß bei dem Aufbau von

0003504

Verbindungen vielfach das Problem besteht, daß aufgrund eines vorgegebenen Steuerablaufes immer die gleichen gestörten Sätze von der zentralen Steuerung für den Aufbau einer Verbindung ausgewählt werden können. Auf diese Weise ist es möglich, daß insbesondere in verkehrsarmen Zeiten überhaupt keine Verbindungen mehr zustande kommen. Dies ist insbesondere dann der Fall, wenn die Speicherbereiche der einzelnen Teilnehmer und der für die Verbindung benötigten Sätze jeweils in einer einzigen Gruppe angeordnet sind. Ist nun z.B. der in Richtung der Absuchreihenfolge der zugehörigen Speicherbereiche gesehene erste Verbindungssatz gestört, so wird die Steuerung versuchen, nacheinander sämtliche Verbindungswünsche der Teilnehmer mittels des gleichen gestörten Verbindungssatzes durchzuführen. Selbst wenn aber der genannte Satz nicht gestört ist, so ist es bei der bekannten Anordnung nachteilig, daß die Steuerung bei der Suche nach einem freien Satz immer an der gleichen Stelle in dieser Gruppe beginnt, da auf diese Weise die Sätze unterschiedlich stark belastet werden. Dies kann die Wahrscheinlichkeit für den Ausfall eines besonders belastenten Verbindungssatzes erhöhen. Zur Vermeidung dieses Problems ist es schon vorgeschlagen worden, das Absuchen des Zustandsspeichers nicht immer an der gleichen Stelle beginnen zu lassen sondern dort, wo der letzte Suchvorgang beendet wurde. Wie weiter oben schon erläutert, kann eine derartige Maßnahme in Verbindung mit der vorliegenden Erfindung das hier angesprochene Problem erhelblich vermindern. Sind nämlich die einzelnen Arten von Anschlußeinrichtungen nicht in Gruppen sondern gemäß der vorliegenden Erfindung beliebiger Reihenfolge angeordnet so ist es nicht sehr wahrscheinlich, daß der von zwei unterschiedlichen Teilnehmern ausgehende Suchlauf zu dem gleichen Innenverbindungssatz der gleichen Amtsübertragung oder ähnliches führt. Da nämlich der Suchlauf meist von weit voneinander entfernten Orten des Zustandsspeichers beginnt z.B. dort. wo beim vorangegangenen Suchlauf ein freier Satz gefunden wurde und die Lage der einzelnen Sätze in dem Speicher weit verstreut ist, ist die Wahrscheinlichkeit, daß verschiedene Teilnehmer immer zu den gleichen (evtl. gestörten) Satz gelangen, gering.

Etwas anderes kann sich allerdings während verkehrsarmer Zeiten z.B. nachts ergeben. Versucht nämlich nur eine einzelne Person nun, z.B. das Wachpersonal, eine Verbindung aufzubauen, so laufen zwangsläufig immer identische Steuervorgänge ab, da die Steuerung nur diesen einzelnen Verbindungswunsch zu erfüllen hat und die diesen Steuerungsablauf beeinflussenden Eingriffe anderer Teilnehmer entfallen. Derartige Störungen können aber nun gerade besonders verhängnisvoll sein z.B. wenn durch das Wachpersonal über eine Fernsprechverbindung Hilfe im Katastrophenfall herbeigeholt werden soll.

Um hier Abhilfe zu schaffen, empfiehlt sich eine in dem Anspruch 10 dargestellte Merkmalskombination. Diese besteht im Prinzip darin, die Adresse des Speicherbereichs festzuhalten, die dem zuletzt belegten freien Satz zugeordnet ist. Bei den Sätzen kann es sich um alle für den Verbindungsaufbau benötigten wichtigen Anschlußeinrichtungen handeln, wie z.B. Wahlaufnahmesätze, Innenverbindungssätze, Amtsübertragungen, Wahlumwerter u.ä. Da nun gewöhnlich die Absuchfolge an einem gleichbleibenden Punkt des Zustandsspeichers, vorzugsweise aber an der Stelle beginnt, an der der letzte Suchlauf beendet wurde, wird nunmehr bei der Suche nach einem freien der betreffenden Sätze der Suchlauf an einer Stelle begonnen, die

- 11 -

0003504

hinter dem zuletzt gefundenen freien Satz liegt. Eine derartige Kombination und die hieraus resultierente Verfahrensweise ist zwar im Prinzip aus der DE-AS 15 62 137 bekannt, die dort geschilderte Anordnung vermag die oben erläuterte Problemstellung aber nur in Sonderfällen, z.B. in besonders verkehrsarmen Zeiten zu lösen. Bei dieser vorbekannten Anordnung ist es nämlich nachteilig, daß in jeder einer Anschlußeinrichtung zugeordneten Speicherzeile ein Speicherplatz für eine Sondermarkierung freigehalten werden muß. Insbesondere bei einer großen Anzahl von Anschlußeinrichtungen wird hier ein beträchtlicher Speicherraum benötigt, während bei der hier beschriebenen Merkmalskombination der Sonderspeicherbereich nur für die Aufnahme einer einzigen Speicheradresse genügen muß. Ein anderer Nachteil der bekannten Schaltungsanordnung liegt darin, daß sie in verkehrsreichen Zeiten nicht verhindern kann, daß ständig wieder die gleiche gestörte Einrichtung von der zentralen Steuerung angeschaltet wird. Da nämlich die dort geschilderte bevorzugte Freikennzeichnung in ihrer Lage springen kann (z.B. ein erster Teilnehmer erhält einen gestörten Innenverbindungssatz, ein zweiter Teilnehmer eine Amtsübertragung, woraufhin der erste Teilnehmer zu dem gestörten Innenverbindungssatz gelangt) ist nicht sicher gestellt, daß durch die gleichzeitigen Verbindungswünsche anderer Teilnehmer immer wieder die gleiche gestörte Anschlußeinrichtung angeschlossen wird. Eine sehr viel weiter gehende Lösung des Problems ergibt sich erst durch Kombination des aus Anspruch 10 sich ergebenden Merkmals mit der vorliegenden Erfindung, da hier die Anschlußeinrichtungen unterschiedlicher Art beliebig verteilt hintereinander in dem Zustandsspeicher angeordnet sind. Es wird nämlich hiermit auf doppelte Weise sichergestellt, daß die Steuerung nicht wieder auf die gleiche gestörte Anschlußeinrichtung zugreifen kann. Wird z.B. in einer verkehrsarmen Zeit versucht immer wieder eine Anschlußeinrichtung in der gleichen Art zu erhalten, so steht in dem gesonderten Speicherbereich nach einem ersten erfolglosen Versuch die Speicherbereichsadresse dieser gestörten Anschlußeinrichtung (z.B. ein Innenverbindungssatz oder einen anderen). Beim nächsten durch den gleichen Teilnehmer verursachten Suchlauf nach einem freien Innenverbindungssatz wird von einem Speicherbereich aus abgesucht, der hinter dem gestörten Innenverbindungssatz liegt. Hier wird also mit Sicherheit ein ungestörter Innenverbindungssatz gefunden. Hierbei kann es sich auch um einen Wahlaufnahmesatz, um eine Amtsübertragung oder ähnliches handeln. Wären nun, wie dies z.B. in der DE-AS 15 62 137 der Fall ist, die einzelnen Arten von Anschlußeinrichtungen in Gruppen hintereinander angeordnet, so würde in diesem Falle wiederum auf den gleichen gestörten Innenverbindungssatz zugegriffen. Da aber die Lage der einzelnen Sätze willkürlich verteilt ist, ist hier erneute Belegung des gestörten Innenverbindungssatzes sehr unwahrscheinlich.

Eine Weiterbildung dieses Prinzips läßt sich noch dadurch erreichen, indem die in Anspruch 11 angegebene Merkmalskombination angewendet wird. In Abzugreihenfolge wechseln die einzelnen, in ihrer Art unterschiedlichen Sätze (IVS, AOE usw.) soweit wie möglich untereinander ab. Zwischen die nacheinander abwechselnden Sätze in dem Zustandsspeicher können aber auch andere Anschlußeinrichtungen, welche von der Überwachungseinrichtung überwacht werden, eingefügt sein. Dieses Prinzip ist aber dann schon sehr wirkungsvoll, wenn man die von der Überwachungseinrichtung zu überwachenden Sätze nur auf Innenverbindungssätze und Amtsübertragungen beschränkt, die sich in ihrer Reihenfolge im Zustandsspeicher miteinander abwechseln können.

Vorteilhafte Weiterbildung der Erfindung ergeben sich aus den Unteransprüchen, insbesondere die eingangs schon erwähnte Möglichkeit, die Speicherbereiche in einzelnen Gruppen zu ergänzen, die einem zur Änderung und Ergänzung dienenden Modul entsprechen. Dieses Modul sollte aus geeigneten Zusammenstellungen von Anschlußeinrichtungen gebildet sein, wie z.B. 20 Teilnehmer, 5 Amtsübertragungen und 3 Innenverbindungssätzen oder ähnliches.

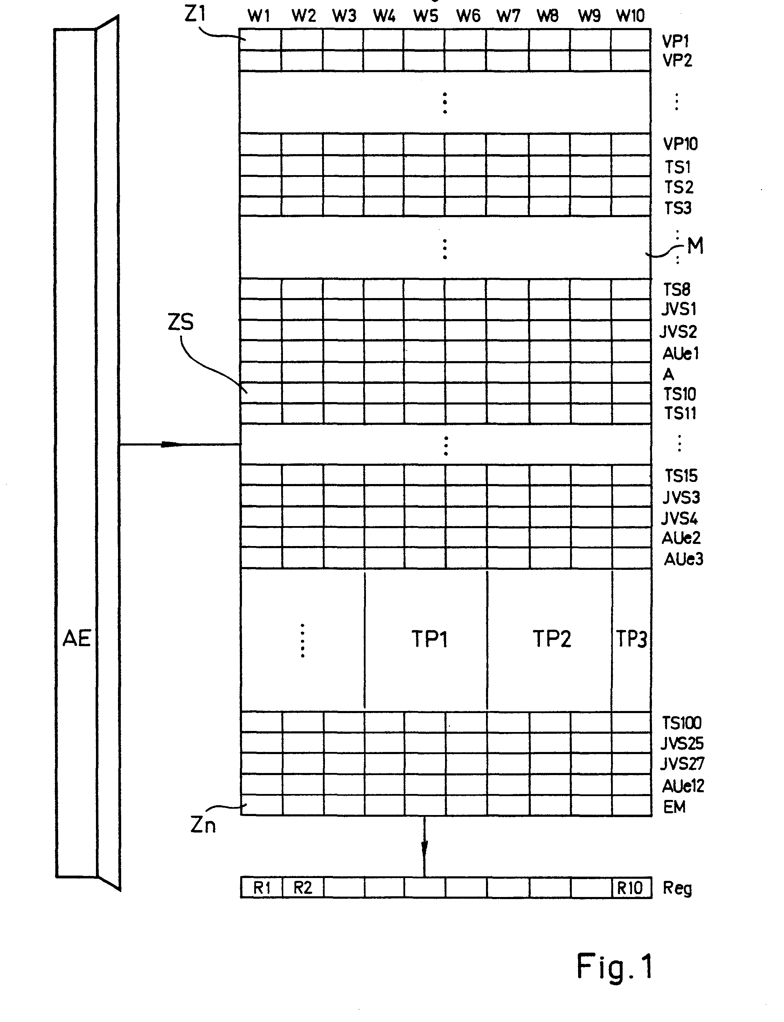

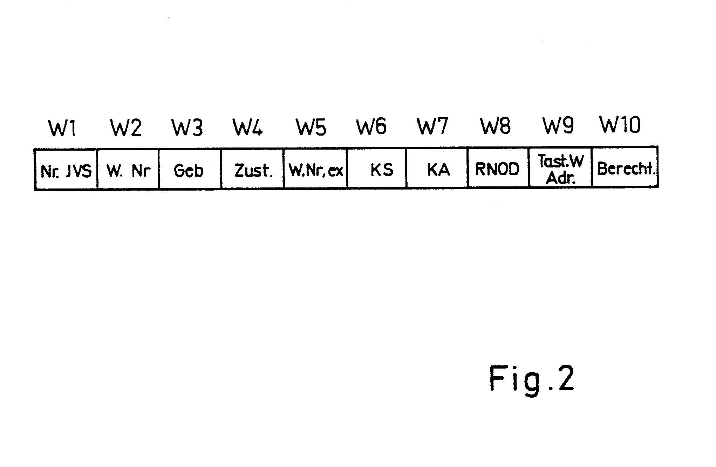

Ein Ausführungsbeispiel der Erfindung wird nachfolgend anhand der Zeichnung beschrieben. Darin zeigt Fig.1 die erfindungsgemäße Anordnung im Zusammenwirken mit einer Kette von Registern und Fig.2 im symbolischer Darstellung eine mehr ins einzelne gehend herausgestellte Zeile des Zustandsspeichers nach Fig.1.

In Fig.1 ist ein Zustandsspeicher ZS dargestellt, welcher aus einzelnen Zeilen Z1 bis Zn aufgebaut ist. Jede der einzelnen Zeilen besteht jeweils aus 10 Worten W1 bis W10, wobei die einzelnen Zeilen in willkürlicher Reihenfolge einzelnen Anschlußeinrichtungen wie z.B. Teilnehmerschaltungen TS, Innenverbindungssätzen IVS, Amtsübertragungen AUe und ähnlichem zugeordnet sind. In der letzten Zeile ist noch ein Index EM angegeben, was bedeuten soll, daß in dieser Zeile eine Endmarkierung EM gespeichert ist. Diese Endmarkierung EM ist in der Lage der Steuerung einen Hinweis darauf zu geben, daß das Ende des Zustandsspeichers ZS erreicht ist, und der Suchlauf nunmehr bei der Zeile Z1 fortgeführt werden muß. Derartige Markierungen sind in der Lage die Länge eines Programms abzukürzen, und damit den Pro-

- 14 -

0003504

grammlauf zu vereinfachen.

Wie aus der Zeichnung ersichtlich, sind die Zeilen jeweils mehrerer gleichartiger Anschlußeinrichtungen hintereinander im Zustandsspeicher ZS angeordnet. Diese Verteilung ist in keiner Weise zwingend und soll nur andeuten, daß die Verteilung der Zeilen der räumlichen Anschlußlage der Anschlußeinrichtungen in den einzelnen Buchten entspricht. So könnte eine Bucht z.B. 8 Teilnehmer, 2 Innenverbindungssätze und eine Amtsübertragung aufweisen. Die dieser Bucht zugeordneten Zeilen sind mit schraffierter Umrandung als ein Modul M des Zustandsspeichers ZS herausgestellt. Selbstverständlich sind aber auch andere Kombinationen innerhalb einer Bucht denkbar und auch zweckmäßig. Derartige Moduln können als steckbare Einheiten ausgeführt sein.

Aus Fig.1 ist weiterhin zu erkennen, daß einem einzigen Vermittlungsplatz mehrere Zeilen (im vorliegenden Ausführungsbeispiel die Zeilen VP1 bis VP10) zugeordnet sein können. Zur Abänderung oder zum Herauslesen gewünschter Informationen muß man die Steuerung die entsprechende Zeile gesondert ansteuern, in der sich die gewünschte Information über den Vermittlungsplatz befindet.

In Fig.1 ist weiterhin durch entsprechende Schraffierungen angedeutet, daß sich der Zustandsspeicher ZS aus einzelnen Teilspeichern Tp1 bis Tp3 zusammensetzt, wobei Tp1 durch ein RAM, Tp2 durch ein PROM und Tp3 durch ein Diodenfeld gebildet ist. Dementsprechend sind in den Worten W1 bis W6 sich schnell ändernde Daten der einzelnen Anschlußeinrichtungen, in den Worten W7 bis W9 nur selten zu ändernde Daten und in dem Wort 10 Daten gespeichert, deren Inhalt für das Wartungspersonal transparent sein soll. Es können aber auch noch zusätzliche Unterteilungen vorgesehen sein, in dem etwa die Worte W8 und W9 der einzelnen Zeilen durch ein PROM gebildet sind. Dies könnte z.B. dann der Fall sein, wenn die dort gespeicherten Daten während der Lebensdauer der Anlage nicht geändert werden sollen oder etwa dem Inhaber dieser Anlage eine Gelegenheit zur möglichen Änderung dieser Daten gegeben werden soll.

Ein Zugriff zu den einzelnen Worten geschieht dadurch, daß mittels einer Adressiereinrichtung AE die Adresse der gewünschten Zeile eingestellt und daraufhin der Inhalt der genannten Zeile in das Gesamtregister Reg übertragen wird. Dabei ist jedem Wort W1 bis W10 jeweils ein Register R1 bis R10 des gesamten Registers Reg zugeordnet. Anschließend ist es durch die Steuerung dann möglich zu einem bestimmten Register und damit zu dem Inhalt eines bestimmten Wortes der gewünschten Zeile zu zugreifen. Nähere Einzelheiten hierzu bilden nicht den Inhalt der vorliegenden Erfindung und sollen daher nicht näher erläutert werden.

In Fig.2 ist noch dargestellt, welchen Informationsinhalt z.B. die einzelnen Worte für die Zeile einer Teilnehmerschaltung haben könnten. Entsprechendes, ggf. mit geeigneten Abwandlungen könnte für die anderen Anschlußeinrichtungen gelten. So kann z.B. in dem Wort W1, der in Fig.2 dargestellten Zeile die Speicheradresse des mit der dazugehörigen Teilnehmerschaltung verbundenen Innenverbindungssatzes aufgeführt sein, was durch die Bezeichnung Nr-IVS dargestellt ist. Das Wort W2 steht bereits für die Aufnahme des von dem zugehörigen Teilnehmer gewählten Wählzeichens, also der Rufnummer des anzurufenden Teilnehmers, wie durch die Kennzeichnung W.Nr. dargestellt ist.

In das Wort W3 können z.B. die für das gerade geführte Gespräch anfallenden Gebühren, aber auch die für einen bestimmten Zeitraum insgesamt angefallenen Gebühren eingetragen werden. Das Wort W4 kann dafür zur Verfügung stehen, den Aushängezustand des Teilnehmers zu beschreiben, während in das Wort W5 Wahlziffern eingetragen werden können, die für eine externe Wahl, also aus der Nebenstellenanlage herausführende Wahl gedacht sind. Dementsprechend sind die Worte W3 bis W5 mit den Kennzeichen "Geb", "Zust", "W.-Nrex" bezeichnet.

Der Inhalt des Wortes W6 kann dazu dienen anzuzeigen, um welche spezielle Ausführungsform einer Gruppe von an sich im wesentlichen gleichartigen Anschlußeinrichtungen es sich handelt. Z.B. um eine zur Gruppe der Teilnehmerapparate gehörende Anschlußeinrichtung, die sich speziell dadurch auszeichnet, daß sie mit Tastwahl ausgestattet ist. Das Wort W6 kann darüberhinaus noch die Möglichkeit geben aufzuzeigen ob die betreffende Anschlußeinrichtung tatsächlich angeschlossen, d.h. gesteckt ist. Etwa in dem mit jeder von der gesteckten Anschlußeinrichtung kommenden Information der Inhalt des Wortes W6 erneut bestätigt wird. Zur Verdeutlichung dieser Möglichkeit der Kennzeichnung ist in W6 die Bezeichnung KD (spezielles Kennzeichen) eingetragen. Es zeigt sich, daß in Worten W1 bis W6 ständig Daten untergebracht sind, so daß diese Worte durch einen Speichertyp mit geeigneter Technologie z.B. einen RAM gebildet sein können. Das Wort W7 nimmt eine allgemeine Kennzeichnung hinsichtlich des Typs der betroffenen Anschlußeinrichtung auf und wurde mit der Bezeichnung KA versehen. Selbstverständlich kann auch das Wort W6 weggelassen werden und eine spezielle Kennzeichnung durch W7 verwirklicht werden, wobei hierdurch allerdings keine Auskunft darüber erlangt werden kann, ob die betreffende Anschlußeinheit tatsächlich gesteckt ist.

In W8 kann eine Rufnummernzuordnung (RNOD) aufgenommen werden, die eine Beziehung zwischen der externen Anschlußnummer des Teilnehmers und der internen Verarbeitungsnummer seiner Zeile schafft. In W8 ist damit also die Teilnehmernummer, unter der der Teilnehmer angerufen wird, eingetragen. In W9 können weitere sich wenig ändernde Eigenschaften des Teilnehmers z.B. seine Direktwahlmöglichkeit oder ähnliches aufgenommen werden. Die Worte W7 bis W9 werden deshalb zweckmäßigerweise durch ein ROM oder ein PROM gebildet. Sie können aber auch auf beide Technologien aufgeteilt werden. In dem Wort W10 ist die Berechtigung des Teilnehmers hinsichtlich der für ihnen erlaubten Wahlziele untergebracht. Da eine derartige Berechtigung relativ leicht von außen veränderbar sein soll und auch von dem Wartungspersonal ohne Schwierigkeiten erkannt werden muß, wird diese Berechtigung durch entsprechend geschaltete Dioden hergestellt.

Ein besonderer Vorteil der erfindungsgemäßen Anordnung liegt nun darin, daß durch Zugriff auf eine einzige Zeile jeweils die zur Bestimmung eines Steuerbefehles notwendigen Informationen sofort zur Verfügung stehen. So ist es z.B. nicht wie bei der in der OS 23 08 813 beschriebenen Anordnung notwendig, zur Kennzeichnung eines an der Verbindung beteiligten Teilnehmers ausgehend von dem ersten Teilnehmer über einen besonderen Verbindungsspeicher den zweiten Teilnehmer herauszufinden. Es ist nämlich bei der vorliegenden Schaltungsanordnung möglich aus der Kenntnis zumindest eines Teilnehmers sämtliche Verbindungsdaten sofort aus der diesem Teilnehmer zugehörigen Zeile zu entnehmen, ohne daß es hierzu gesonderter Anfragen in der Zeile des zweiten Teilnehmers oder etwa der Zeile des gemeinsamen Verbindungssatzes bedürfte. Hierdurch können die einzelnen Programme sehr schnell und zweckmäßig abgewickelt werden und es läßt sich der Rückgriff auf einen oder mehrere nur bestimmter Informationen enthaltende Speicher (z.B. hinsichtlich der Daten einer Verbindung oder die Berechtigung eines Teilnehmers, der Rufnummernumwertung oder ähnliches) vermeiden. Entsprechendes gilt für die Anzeige von Gebühren beim Teilnehmer oder am Vermittlungsplatz oder den Ausdruck von Teilnehmerdaten mittels eines Servicegerätes. Im Folgenden soll kurz der Aufbau einer Verbindung zwischen zwei Teilnehmern erläutert werden, wobei der Teilnehmer TS1 den Teilnehmer TS2 ruft.

Beim Aushängen von TS1 wird durch AE die entsprechende Zeile aufgesucht und der neue Aushängezustand in W4 eingetragen. Aufgrund der festgestellten Änderung wird TS1 ein Innenverbindungssatz z.B. IVS1 zur Verfügung gestellt und dort ein entsprechender Wählton angelegt. Die Nummer dieses IVS1 wird in W1 von TS1 ebenfalls eingetragen. Anschließend wird die von TS1 gewählte Rufnummer binär codiert in W2 eingetragen und es wird durch Absuchen der Spalte W8 die Zeile von TS2 gefunden, in die die IVS-Nr. und TS1-Nr. ebenfalls eingetragen wird. Beim Feststellen dort in Wort W4, daß TS2 nicht ausgehängt hat, wird über die Teilnehmerschaltung Rufton zu TS2 gegeben. Bei Feststellung des geänderten Zustandes von TS2, der nunmehr aufgrund des Rufzeichens ausgehängt hat, wird über die IVS-Nummer in W1 von TS1 der zweite zugehörige Teilnehmer gefunden und aufgrund dessen sich aus W4 ergebenden Zustand werden die beiden Teilnehmer über ein Koppelfeld miteinander von der Steuerung verbunden.

P 3391
Pt/sch
2.1.1979

Zentraler Zustandsspeicher für Vermittlungsanlagen

Patentansprüche :

1. Anordnung zur zentralen Speicherung der die Zustände von Anschlußeinrichtungen betreffenden Informationen, insbesondere bei Vermittlungsanlagen, bei der jeder Anschlußeinrichtung ein Speicherbereich fest zugeordnet ist,
dadurch gekennzeichnet,
daß die Speicherbereiche (Z) der verschiedenartigen Anschlußeinrichtungen (VP, IVS, AUe, TS) in beliebiger Reihenfolge nacheinander in einem Zustandsspeicher (ZS) angeordnet sind.

2. Schaltungsanordnung nach Anspruch 1,
dadurch gekennzeichnet,
daß die Anschlußeinrichtungen aus Teilnehmerschaltungen (TS) Innenverbindungssätzen (IVS) Amtsübertragungen (AUe) Vermittlungsplätzen (VPl) und ggf. Querübertragungen (QUe) Nebenanschlußleitungsübertragungen (NUe) Personensucheinrichtungen, Türfreisprecheinrichtungen oder Direktrufeinrichtungen gebildet sind.

3. Schaltungsanordnung nach Anspruch 1 oder 2,
dadurch gekennzeichnet,
daß jeder Anschlußeinrichtung jeweils eine Zeile (Zl bis Zn) des Zustandsspeichers (ZS) fest zugeordnet ist.

0003504

4. Schaltungsanordnung nach einem der Ansprüche 1
bis 3,
dadurch gekennzeichnet,
daß dem Vermittlungsplatz mehrere Zeilen (VPl1
bis VPl10) des Zustandsspeichers (ZS) zugeordnet
sind.

5. Schaltungsanordnung nach einem der Ansprüche 1
bis 4,
dadurch gekennzeichnet,
daß zwischen den sich einander in der Reihenfolge abwechselnden Zeilen der Innenverbindungssätze
(IVS) und der Amtsübertragung (AUe) die Zeilen
der Teilnehmerschaltungen (TS) in dem Zustandsspeicher (ZS) angeordnet sind.

6. Schaltungsanordnung nach einem der Ansprüche 1
bis 5,
dadurch gekennzeichnet,
daß jede Zeile (Z) in Worte (W1 bis W10) unterteilt ist, daß den Worten der Zeilen (Z) jeweils
ein Register (R1 bis R10) zugeordnet ist, in die
zum Lesen oder Ändern des Zeileninhalts dieser
eingegeben wird, wobei dann zu einem gewünschten
Wort einer Zeile durch Aktivieren des entsprechenden Registers zugegriffen werden kann.

7. Schaltungsanordnung nach einem der Ansprüche 1
bis 6,
dadurch gekennzeichnet,
daß sich alle Zeilen jeweils aus mehreren Bereichen (z.B. W1 bis W6, W7 bis W9, W10) zusammensetzen, die verschiedenen Speichertechnologien angehören (z.B. PROM, ROM, RAM, Dioden).

8. Schaltungsanordnung nach Anspruch 7,
dadurch gekennzeichnet,
daß die sich über die Zeilen und senkrecht zu
diesen erstreckende Bereiche aus ROM's, PROM's
RAM's und Dioden gebildet sind, wobei in den
ROM's anlagen spezifische Daten, in den PROM's
teilnehmerspezifische Daten, in den Diodenfeldern änderbare und in den RAM's sich oft ändernde
Daten der Anschlußeinrichtungen untergebracht
sind.

9. Schaltungsanordnung nach einem der Ansprüche 1
bis 8,
dadurch gekennzeichnet,
daß mehrere Zeilen (Z) des Zustandsspeichers (ZS)
zu einem Modul zusammgefaßt sind, dessen zugehörige
Anschlußeinheiten in einer Bucht eines Vermittlungsschranks angeordnet sind, wobei mehrere, teilweise auch gleichartige Buchten die vorgeschriebenen Anschlußeinrichtungen gewünschter bzw. zugelassener Vermittlungsanlagen umfassen können.

10. Schaltungsanordnung nach einem der Ansprüche 1
bis 9,
dadurch gekennzeichnet,
daß eine Überwachungsschaltung vorgesehen ist,
welche die Belegung freier für den Aufbau einer
Verbindung benötigter Sätze aufgrund der aus den
einzelnen Speicherbereichen ausgespeicherten Zustände überwacht, daß ein gesonderter Speicherbereich vorgesehen ist, in welchen die Überwachungsschaltung immer die Speicherbereichsadresse des
zuletzt belegten Satzes einspeichert und daß vor
dem Absuchen der einzelnen Speicherbereiche nach
einem für eine neue Verbindung benötigten freien
Satz die zumindest um einen Zählerschritt in der

0003504

Absucheinrichtung veränderte Speicherbereichsadresse aus dem gesonderten Speicherbereich in
einen zur Adressierung der nacheinander abzusuchenden Speicherbereiche dienenden Adressgeber gegeben
wird, welcher den Absuchvorgang mit der eingegebenen Speicherbereichsadresse beginnt.

11. Schaltungsanordnung nach Anspruch 10,
    dadurch gekennzeichnet,
    daß die Speicherbereiche der von der Überwachungsschaltung auf ihre Belegung überwachten Sätze unterschiedlicher Art sich in der Absuchrichtung abwechseln.

12. Schaltungsanordnung nach Anspruch 10 oder 11,
    dadurch gekennzeichnet,
    daß die Überwacbungsschaltung nur Innenverbindungs-
    sätze (IVS) und Amtsübertragungssätze (AÜe) über-
    wacht und deren Adressen in den Sonderspeicher
    überträgt.

P 3391
28.12.1978
Pt/sch

0003504

½

Fig.1

| W1 | W2 | W3 | W4 | W5 | W6 | W7 | W8 | W9 | W10 |
|---|---|---|---|---|---|---|---|---|---|
| Nr. JVS | W. Nr | Geb | Zust. | W.Nr,ex | KS | KA | RNOD | Tast.W Adr. | Berecht. |

Fig.2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | <u>DE - A - 1 562 137</u> (SIEMENS)<br><br>* Seite 10, Zeilen 14-19; Seite 20, Zeile 13 bis Seite 21, Zeile 18; Figur 2 *<br><br>& DE - B - 1 562 137<br>-- | 1-3,5,6 |
| | <u>FR - A - 1 347 744</u> (C.G.C.T.)<br><br>* Seite 3, rechte Spalte, Zeilen 32-41; Seite 5, linke Spalte, Zeilen 23-38; Figur 6 *<br><br>-- | 1,6 |
| | <u>DE - B - 2 033 660</u> (SIEMENS)<br><br>* Spalte 6, Zeile 60 bis Spalte 7, Zeile 48; Spalte 8, Zeilen 27-40; Figur 2 *<br><br>-- | 1,10 |
| | <u>DE - A - 1 512 036</u> (TELEFONBAU)<br><br>* Seite 10, Zeilen 1-7 *<br><br>-- | 7 |
| | <u>FR - A - 2 346 775</u> (HUGON et al.)<br><br>* Seite 7, Zeile 27 bis Seite 8, Zeile 11; Figur 6 *<br><br>---- | 7 |

**KLASSIFIKATION DER ANMELDUNG (Int.Cl.³)**

H 04 Q 3/54
       3/70
H 04 M 3/60
H 04 Q 3/62

**RECHERCHIERTE SACHGEBIETE (Int. Cl.²)**

H 04 Q 3/54

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-05-1979 | VANDEVENNE |

EPA form 1503.1 06.78